(19) Europäisches Patentamt

European Patent Office

Office européen des brevets

(11) **EP 1 056 225 A1**

(12) **EUROPEAN PATENT APPLICATION**

(43) Date of publication:
**29.11.2000 Bulletin 2000/48**

(51) Int. Cl.⁷: **H04B 7/26**

(21) Application number: **99500087.4**

(22) Date of filing: **27.05.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Alcatel Espana, S.A.**
**28045 Madrid (ES)**

(72) Inventors:
• **Heras Brandin, Alberto**
  **28045 Madrid (ES)**
• **Gomez Mateo, Daniel**
  **28045 Madrid (ES)**
• **Izquierdo Arce, Jesus**
  **28045 Madrid (ES)**
• **Bartolome Pascual, Purificacion**
  **28045 Madrid (ES)**
• **Lopez Almansa, Eugenio**
  **28045 Madrid (ES)**

(74) Representative:
**Elzaburu Marquez, Alberto et al**
**Elzaburu S.A.,**
**Miguel Angel, 21**
**28010 Madrid (ES)**

(54) **Method and system for extending coverage of a radiocommunication system**

(57) Method for extending coverage of a radiocommunication system comprising a fixed unit connected via radio to a remote unit such that both units comprise respectively transmitting and receiving means. Each transmitter has means for causing each bit (2D) corresponding to a data signal to be encoded by means of a second predetermined number of code bits (3C), which is greater than a first predetermined number of code bits, whereby the greater the second number of code bits (3C) is, the greater shall be the range of the coverage area associated with the fixed unit.

FIG. 3

EP 1 056 225 A1

**Description**

## OBJECT OF THE INVENTION

A radiocommunications system is divided into a plurality of cells in which each one contains at least one fixed unit which comprises transmitting and receiving means, and at least one remote unit which also comprises transmitting and receiving means, so that they can establish communication via radio over communications channels.

The present invention relates to a method for extending the coverage area of the cell corresponding to a fixed unit of the radiocommunications system so that code division multiple access (CDMA) and time division multiple access (TDMA) techniques are employed together for carrying out communications via radio to the mobile and/or fixed remote units, which are within the coverage area of the fixed unit.

## STATE OF THE ART

The coverage area of a fixed unit, base station, of a radiocommunications system which employs code division multiple access (CDMA) techniques is a function of the bit rate used in both communication directions, having been described in the state of the art in, for example, the book "Wideband CDMA for Third Generation Mobile Communications" by Tero Ojanperä and Ramjee Prasad, published by Artech House Publishers, section 7.6.5, incorporated in this application by reference.

Likewise, table 7.25 of the book mentioned, reflects the relationship existing between the bit rate and the maximum range of the coverage area of the base station. In brief, a lower bit rate implies a greater coverage area.

As a consequence, the aforesaid represents a drawback with respect to radiocommunications systems presently existing, and which shall coexist for a time with CDMA systems, whose installation has begun.

This is due to the fact that in the earlier systems, the coverage area of a base station did not vary as a function of the bit rate used to provide a service to a user of the communications system.

Therefore it has become necessary to develop a method which permits, insofar as it is possible, the extension of the coverage area of a fixed unit belonging to the radiocommunications system.

Consequently, the infrastructure necessary for deploying the radiocommunication system is reduced; that is, the number of necessary fixed units and remote fixed units is reduced and, therefore, the cost of the radiocommunications system. For this reason, the market (operators, users, etc.) shall encourage the deployment of these systems.

From the ecological viewpoint, the reduction in the number of locations needed for housing remote and fixed units is an additional advantage.

## CHARACTERISATION OF THE INVENTION

To overcome or mitigate the problems above described, a radiocommunications system has been proposed for duplex communications, divided into a plurality of cells in which each one contains at least one fixed unit and a set of remote units, fixed and/or mobile, distributed throughout the cell, in such a manner that both the fixed unit and the remote units include respectively transmitting and receiving means.

The radiocommunications system uses both code division multiple access and time division multiple access techniques together for carrying out communications via radio.

The information signal is transmitted in bursts; that is, there are time periods during which no information is transmitted relative to the communication in course.

Each transmitter comprises means adapted for encoding or spreading a plurality of bits in a data signal by means of a bit stream of a code signal, generating a signal to be transmitted in an allocated time slot.

Thus, each bit of the data signal is spread by means of a second predetermined number of bits of the code signal, which is greater than a first predetermined number of bits of the code signal, so that the greater the second predetermined number of bits is, the greater will be the range of the coverage area of the cell associated with the fixed unit.

Thus, if the information corresponding to a time slot is transmitted during at least two time slots, that is the time employed for transmitting the same information is greater, this implies that the ratio between the code signal bit rate and the data bit rate increases.

This means that there are more bits of the code signal for each bit of the data signal, so that the range of the coverage area of the fixed unit increases, diminishing in turn the number of simultaneous conversations that the fixed unit can establish.

## BRIEF DESCRIPTION OF THE FIGURES

A more detailed explanation of the invention is provided in the following description, based on the attached figures, in which:

- figure 1 shows a diagram of a radiocommunications system according to the invention,
- figure 2 shows various signals in the transmitter of a fixed unit and/or mobile unit according to the state of the art,
- figure 3 shows various signals in the transmitter of the fixed unit and/or mobile unit according to the invention, and
- figure 4 shows in graphical form the increment in the range of the cell corresponding to a fixed unit versus the number of time slots grouped together according to the invention.

## DESCRIPTION OF THE INVENTION

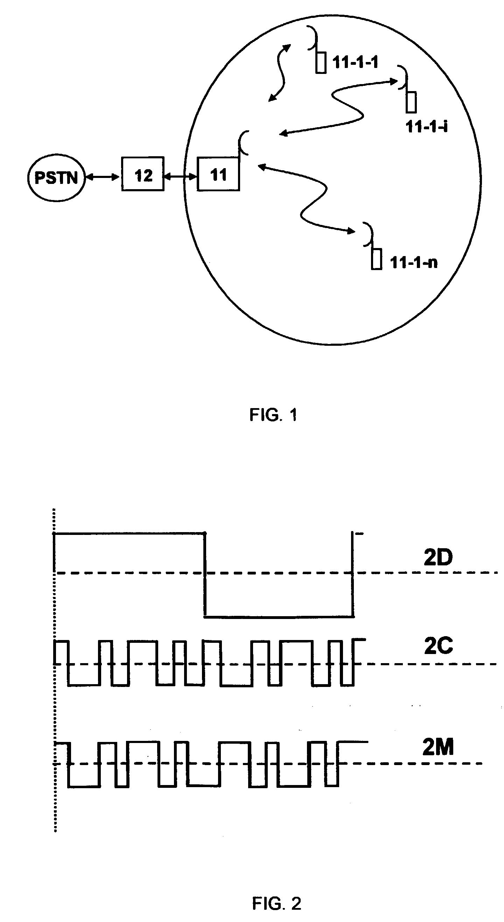

Figure 1 shows a preferred embodiment of the radiocommunications system for duplex communications, which employs code division multiple access (CDMA) and time division multiple access (TDMA) techniques together for carrying out communications via radio.

The system is divided into a plurality of cells in which each cell comprises at least one fixed unit 11, which is normally connected by a cable network to a fixed unit controller 12, by means of which the subscribers gain access to a public switched telephone network PSTN, for example.

The fixed unit 11 comprises means for transmitting and receiving radio signals over communications channels to and from a set of remote units 11-1-1 to 11-1-n, fixed and/or mobile, which are distributed throughout its coverage area. The remote units 11-1-1 to 11-1-n also include transmitting and receiving means.

In relation to figure 2, an information signal is encoded, that is spread, and modulated on a carrier frequency suitable for being transmitted over the air interface, so that each data signal generated in the form of a data bit stream 2D is fed to a transmitter which can be associated to the fixed unit 11 and/or remote unit 11-1-i (where i= 1, ..., n).

The data bits 2D generated at a predetermined bit rate are applied to means associated to the transmitter in order to be spread over a bandwidth by means of a code signal generated in the form of a code bit stream, first predetermined number of code bits 2C, termed also chips (the code signal rate being the chip rate) which can take either of the values "+1" or "-1". Afterwards, the generated signal 2M is modulated and the signal so generated is transmitted.

The transmitted signal is superimposed in the frequency domain with other similar signals, only during the allocated time slot. That is, various transmitters transmit simultaneously in the same bandwidth and in the same time slot.

The radio signal received is decoded (despread) in a receiver associated to the fixed unit 11 and/or the remote unit 11-1-i. For carrying out the despreading process, use is made of the first code bits sequence 2C used during the spreading process, so that the original data signal is reproduced.

The information transmitted successively in the corresponding time slots, in successive frame periods, is assembled for reconstructing the original information signal, such as voice, data or other digitised information.

Each frame has a predetermined duration, for example 10 ms, and each of the frames is divided into a predetermined number of time slots such that the transmission of information takes place in bursts, that is, there are time periods in which there is no transmission.

Each of the time slots can be employed either in the uplink, or in the downlink direction of the transmission, the time slots being allocated dynamically to each communication.

Returning to figure 1, the theoretical cell associated with the fixed unit 11 has a circular shape. However, the plan on the site of the cell is deformed by parameters such as the relief of the geographical location in which the fixed unit 11 is located, for which reason adjacent fixed units are located in such a manner that their cells overlap, ensuring thereby continuous radio coverage.

To extend the range of the cell of fixed unit 11, the following approach is adopted. With respect to figure 2, in order to obtain the desired spreading of the bits of data signal 2D, the chip rate of the code signal 2C must be greater than the bit rate of data signal 2D. That is, each bit of the data signal is combined with a predetermined number of code bits.

Thus, a quotient is defined between the chip rate and the data rate termed the processing gain or spreading factor Gp, since the code signal 2C consists of a predetermined sequence of code bits.

It is understood that the processing gain Gp is the number of code bits used to encode one bit of the data signal in the spreading process of the radiocommunications system.

The signal 2M resulting from the combination process is modulated and subsequently transmitted, in such a way that each frame allocated to a radio link established between the remote unit 11-1-i and the fixed unit 11, will transport a predetermined number of information bits corresponding to the signal to be transmitted, which is characteristic of the communications service required by the subscriber to the communications system.

When the transmission of the signal bits to be transmitted corresponding to an allocated time slot is carried out in at least two time slots, this implies an increase in the processing gain Gp; that is, more time is employed in transmitting the same number of bits corresponding to an allocated time slot.

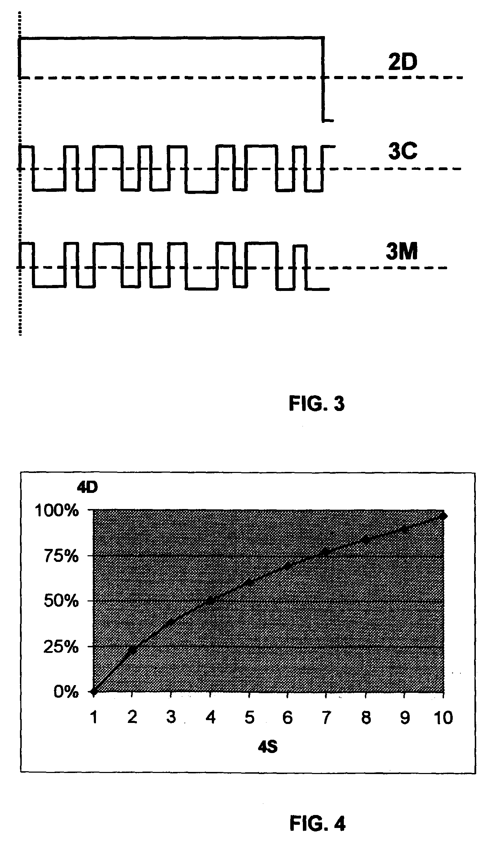

The foregoing can be better understood in connection with figure 3. To achieve the increment in processing gain Gp, the approach is as follows: each bit 2D of the data signal is spread with a second predetermined number of code bits 3C, which is greater than the first code bits sequence 2C, generating thereby a signal 3M to be transmitted, which transports a lower number of information bits 2D corresponding to the data signal. Nevertheless, the bit rate of the frame continues to be maintained.

A direct consequence of expanding the transmission time for sending a predetermined number of bits 2D of the data signal is that more power per bit 2D is transmitted, so that the range D of the coverage area of the cell corresponding to the fixed unit 11 is modified in such a manner that it is increased.

This can be more easily understood if an analysis is made of the link budget between the radio link and the losses due to propagation.

Thus, the parameters which have more influence on the propagation losses are the range D of the coverage area associated with the fixed unit 11 and the attenuation factor (factor that estimates the potential fading in the transmitted signal).

On the other hand, the link budget is mainly a function of the power with which the signal to be transmitted is emitted, of the minimum power with which the transmitted signal has to be received in order to be able to recover the original data signal (this latter parameter being, in turn, a function of the processing gain Gp), of the thermal noise Nt defined as the noise power at the receiver input, etc.

So, if the propagation losses are equated to the link budget and the range D is obtained, it is found that the greater the processing gain Gp is, the greater is the range D of the coverage area of the cell corresponding to the fixed unit 11.

The formula for the range D corresponding to the coverage area of the fixed unit is given by

$$\log (D) = [Pmax - Nt + 10\log (Gp) - (Eb/NO) + 10\log (1 - X) + M - A]/B$$

where:

- Pmax is the maximum transmission power,
- Nt is the thermal noise power,
- Gp is the quotient between the chip rate and the data rate of the subscriber,
- Eb/NO is the quotient between the received power per bit and the noise power spectral density, this being thermal noise and interference (there is a threshold of Eb/NO below which recovery of the data signal in reception becomes impossible),
- X is a factor that measures the number of traffic channels associated to the fixed unit 11,
- M is a function of the technical characteristics of the equipment and other parameters fixed by the design, and
- A and B are parameters depending on the propagation model.

Thus, grouping at least two time slots, adjacent or not adjacent, in the same direction of transmission and maintaining the bit rate of the frame, for example ADPCM at 32 kbps, the range D of the coverage area of the cell is extended, however this acts to the detriment of the number of simultaneous communications that can be established by the fixed unit 11. See figure 4 in which the X-axis represents the number of grouped time slots and the Y-axis represents the increment in the range expressed as a percentage.

In the event that consecutive time slots are grouped together, the new time slots so formed can have a single signalling field A and a single information field B, in such a way that the A field associated to the new time slot comprises at least one A field of the grouped time slots, for example.

Likewise, the B field associated to the new time slot comprises at least one B field of the grouped time slots, being able also to comprise at least one A field of these time slots, for example.

The increment in the range D of the coverage area is a function of, among other parameters, the number of time slots that are grouped together for carrying out a communication.

In short, if a determined number of information bits 2D, corresponding to the data signal, are transmitted in a longer transmission period grouping time slots, a greater processing gain Gp is achieved, the range D is affected in the sense that it is increased and, in turn, the number of communications that can be simultaneously established is reduced.

An operator can offer continuous coverage while employing less infrastructure so that the overall cost of the radiocommunications system is lower.

**Claims**

1. **Method for extending coverage of a radiocommunications system** comprising at least one fixed unit (11) connected via radio to a plurality of remote units (11-1-1 to 11-1-n) distributed throughout its cell, such that said fixed unit (11) and said remote units (11-1-1 to 11-1-n) comprise respectively transmitting and receiving means, and in which each transmitter spreads each bit (2D) of a data signal by means of a first predetermined number of code bits (2C) of a code signal, generating a signal to be transmitted in an allocated time slot of a frame; **characterised** in that each bit (2D) of said data signal is spread by means of a second predetermined number of code bits (3C) of said code signal, such that said second predetermined number of code bits (3C) is greater than said first predetermined number of code bits (2D), so that said signal to be transmitted in said allocated time slot contains a smaller number of bits of said data signal.

2. **Method for extending coverage** according to claim 1, **characterised** in that at least two time slots of a same frame are grouped together for increasing the number of bits of said data signal transmitted.

3. **Method for extending coverage** according to claim 2, **characterised** in that said at least two time slots grouped together are adjacent.

4. Method for extending coverage according to claim 3, **characterised** in that said two time slots grouped together and adjacent contain a single signalling field A and a single user information field B.

5. **Method for extending coverage** according to claim 2, **characterised** in that said at least two time slots grouped together are separated in time by at least one time slot corresponding to said frame.

6. **System for extending coverage of a radiocommunications system** comprising at least one fixed unit (11) connected via radio to a plurality of remote units (11-1-1 to 11-1-n) distributed throughout its cell, such that said fixed unit (11) and said remote units (11-1-1 to 11-1-n) comprise respectively transmitting and receiving means, and in which each transmitter comprises means adapted for spreading each bit (2D) of a data signal by means of a first predetermined number of code bits (2C) of a code signal, generating at its output a signal to be transmitted in an allocated time slot of a frame; **characterised** in that each bit (2D) of said data signal is spread by means of a second predetermined number of code bits (3C) of said code signal, such that said second predetermined number of code bits (3C) is greater than said first predetermined number of code bits (2D), so that said signal to be transmitted in said allocated time slot contains a smaller number of bits of said data signal.

7. **System for extending coverage** according to claim 6, **characterised** in that each transmitter comprises means adapted for grouping together at least two time slots of said frame for increasing the number of bits (2D) of said data signal transmitted.

FIG. 1

FIG. 2

**FIG. 3**

**FIG. 4**

**European Patent Office**

## EUROPEAN SEARCH REPORT

Application Number

EP 99 50 0087

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 876 008 A (SIEMENS AG ;FRANCE TELECOM (FR)) 4 November 1998 (1998-11-04) * column 4, line 51 - column 7, line 16 * * claims 1,2,8; figures 3,4 * | 1-3,5-7 | H04B7/26 |
| Y | | 1-4 | |
| Y | EP 0 670 640 A (TELIA AB) 6 September 1995 (1995-09-06) * column 4, line 15 - line 27 * * claims 1-3; figure 3 * | 1-4 | |
| | | | **TECHNICAL FIELDS SEARCHED (Int.Cl.7)** |
| | | | H04B |

The present search report has been drawn up for all claims

| Place of search | Date of completion of the search | Examiner |
|---|---|---|
| THE HAGUE | 20 October 1999 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 056 225 A1

## ANNEX TO THE EUROPEAN SEARCH REPORT
## ON EUROPEAN PATENT APPLICATION NO.

EP 99 50 0087

20-10-1999

| Patent document cited in search report | | Publication date | Patent family member(s) | | Publication date |
|---|---|---|---|---|---|
| EP 0876008 | A | 04-11-1998 | NONE | | |
| EP 0670640 | A | 06-09-1995 | SE | 9400722 A | 04-09-1995 |

EPO FORM P0459